# EUROPÄISCHE PATENTSCHRIFT

(11) **EP 3 996 562 B1**
(45) Veröffentlichungstag und Bekanntmachung des Hinweises auf die Patenterteilung: **08.05.2024**
(21) Anmeldenummer: 20764296.8
(22) Anmeldetag: 13.07.2020
(51) Int. Cl.: A47J 43/25, B26B 11/00

(54) **KOMBINIERTE REIBE-, SCHNEIDE- UND ABTROPFVORRICHTUNG**
COMBINED GRATING, CUTTING AND DRAINING DEVICE
DISPOSITIF COMBINÉ POUR RÂPER, COUPER ET ÉGOUTTER

(30) Priorität: 11.07.2019 DE 102019118870
(43) Veröffentlichungstag der Anmeldung: 18.05.2022
(73) Patentinhaber: Spatola, Maria Isenia, 60489 Frankfurt am Main (DE)
(72) Erfinder: Spatola, Maria Isenia, 60489 Frankfurt am Main (DE)
(74) Vertreter: Dr. Langfinger & Partner
(86) Internationale Anmeldenummer: PCT/DE2020/100612
(87) Internationale Veröffentlichungsnummer: WO 2021/004587

(56) Entgegenhaltungen:
- DE-U1-202018 000 096
- US-A1- 2005 006 505
- US-A1- 2018 154 532

## Beschreibung

Die vorliegende Erfindung betrifft eine Vorrichtung, geeignet zur Verwendung als Schneidevorrichtung zum Zerkleinern von Lebensmitteln, als Reibevorrichtung zum Reiben von Lebensmitteln und als Abtropfvorrichtung.

Schneidevorrichtungen zum Zerkleinern von Lebensmitteln sind an sich bekannt und wurdenbereits in vielfältiger ausgestaltung in der Literatur beschrieben.

Gleiches gilt für Reibeeinrichtungen, mit denen feste Lebensmittel wie z.B. Käse gerieben werden können.

Schließlich wurden auch Abtropfvorrichtungen, mit denen feste Produkte aus flüssigen Medien durch Abtropfenlassen der Flüssigkeit getrennt werden können, in der Literatur bereits vielfältig beschrieben.

Entsprechende Vorrichtungen für diese Einzelanwendungen sind in vielen Haushalten vorhanden und benötigen einen entsprechenden Platz zum Aufbewahren.

Die Druckschrift US 2005/006505 A1 offenbart eine Vorrichtung mit einem funktionalen planaren Element, welches von einer geraden ersten Kante und zwei weiteren geraden Kanten begrenzt wird, deren Verlängerungen sich in einem Punkt schneiden, wobei das funktionale Element auf einer seiner Oberflächen vorstehende Einrichtungen aufweist, die ein Reiben von Lebensmitteln ermöglichen, und die beiden geraden Kanten des funktionalen Elements mit Halteeinrichtungen versehen sind, mit denen das funktionale Element gehalten werden kann, wobei das funktionale Element der Vorrichtung durch Aufeinanderzubewegen der beiden Halteeinrichtungen in eine im wesentlichen kegelstumpfartige Form überführt werden kann.

Aufgrund der Vielzahl in heutigen Haushalten vorhandener Vorrichtungen zur Lebensmitttelbe- und -verarbeitung ist es wünschenswert, den Platzbedarf für entsprechende Vorrichtungen möglichst gering zu halten.

Daher war es Aufgabe der vorliegenden Erfindung, den Platzbedarf für entsprechende Vorrichtungen zu verringern.

Diese Aufgabe wird erfindungsgemäß durch eine Vorrichtung gemäß Anspruch 1 gelöst.

Bevorzugte Ausführungsfromen der Erfindung sind den Unteransprüchen und der nachfolgenden detaillierten Beschreibung zu entnehmen.

Die erfindungsgemäße Vorrichtung gemäß Anspruch 1 ist geeignet zur Verwendung als Schneidevorrichtung zum Zerkleinern von Lebensmitteln, als Reibevorrichtung zum Reiben von Lebensmitteln und als Abtropfvorrichtung, d.h. sie inkorporiert mehrere Funktionalitäten in einer räumlichen Ausgestaltung. Gegenüber der Realisierung dieser Funkionalitäten in unterschiedlichen Ausgestaltungen verringert sich der Platzbedarf für die Aufbewahrung erheblich.

Die erfindungsgemäße Vorrichtung weist ein funktionales, im wesentlichen planares, Element auf, welches von einer im wesentlichen kreisbogenförmigen ersten Kante und zwei weiteren im wesentlichen geraden Kanten begrenzt wird, die sich selbst oder deren Verlängerungen sich in einem Punkt schneiden.

Für die Herstellung des funktionalen Elements eignen sich grundsätzlich eine Vielzahl von Materialien und die Materialwahl unterliegt keiner besonderen Beschränkung, solange sichergestellt ist, dass das funktionale Element durch Aufeinanderzubewegen der Halteeinrichtungen an den im wesentlichen geraden Kanten des funktionalen Elements in eine im wesentlichen kegelförmige oder eine im wesentlichen kegelstumpfförmige Form überführt werden kann. Dies erfordert eine ausreichende Flexibilität des funktionalen Elements, was bei der Materialauswahl entsprechend berücksichtigt werden muss. Generell können jedoch eine Vielzahl von Materialien diese Anforderungen an die Flexibilität erfüllen.

Nur beispielhaft seien Kunststoffe, metallische Werkstoffe oder keramische Werkstoffe als geeignete Materialien für das funktionale Element genannt. In einigen Fällen haben sich metallische Werkstoffe als vorteilhaft erwiesen.

Die erste, im wesentlichen kreisförmige Kante des funktionalen Elements ist ganz oder teilweise als Schneidkörper ausgestaltet. Durch die kreisbogenförmige Gestaltung der Schneide des Schneidkörpers eignet sich diese insbesondere als sogenanntes Wiegemesser.

Wiegemesser sind spezielle Messer zum feinen Zerkleinern von Kochzutaten. Sie bestehen aus einer im Regelfall gebogenen Klinge mit Griffen an beiden Enden. Ein Wiegemesser wird in der Regel beidhändig gehalten, und die Zutaten werden auf einem Brett mit wiegenden Bewegungen zerkleinert. Wiegemesser werden häufig zum Zerkleinern von Kräutern und Ähnlichem verwendet, können jedoch grundsätzlich zum Zerkleinern von Lebensmitteln jeglicher Art eingesetzt werden.

Es sind auch Wiegemesser bekannt, die nur einen Handgriff aufweisen und demzufolge mit einer Hand bedient werden können. Entsprechende Produkte sind beispielsweise in der EP 455248 beschrieben.

Der Schneidkörper kann sich übder die gesamte Länge der ersten imwesentlichen kreisbogenförmigen Kante des funktionalen Elements erstrecken. Es ist jedoch genauso möglich und hat sich in manchen Fällen als vorteilhaft erwiesen, nur einen Teil der ersten im wesentlichen kreisbogenförmigen Kante als Schneidkörper zu gestalten und insbesondere den Bereich in der Nähe der Halteeinrichtungen nicht in den Schneidkörper einzubeziehen. Dies erhöht die Sicherheit bei der Anwendung des Wiegemessers, da die Gefahr verringert wird, dass der Nutzer beim Ergreifen der Vorrichtung an den Halteeinrichtungen in den Schneidkörper greift und sich verletzen könnte. Vorzugsweise sind mindestens 50 %, besonders bevorzugt mindestens 60 % der im wesentlichen kreisbogenförmigen Kante als Schneidkörper ausgestaltet. Vorzugsweise sind bis zu zehn, besonders bevorzugt bis zu 20 % der ersten, im wesentlichen kreisbogenförmigen Kante nicht als Schneidkörper ausgestaltet. Die nicht als Schneidkörper ausgestalteten Abschnitte der ersten im wesentlichen kreisbogenförmigen Kante des funktionalen Elements liegen vorzugsweise in der Nähe der Halteeinrichtungen während der als Schneidkörper ausgestaltete Teil in der Regel symmetrisch vom Mittelpunkt dieser Kante ausgehend gestaltet ist.

Gemäß einer Ausführungsform der Erfindung kann der als Schneidkörper ausgestaltete Teil der ersten im wesentlichen kreisbogenförmigen Kante des funktionalen Elements mit einer Schutzeinrichtung versehen sein, die die Schneide des Schneidkörpers abdeckt, solange nicht von der Schneidefunktion Gebrauch gemacht wird. Dies erhöht die Sicherheit bei der Verwendung der erfindungsgemäßen Vorrichtung als Reibe- oder Abtropfvorrichtung.

Das funktionale Element der erfindungsgemäßen Vorrichtung weist auf mindestens einer seiner Oberflächen vorstehende Einrichtungen (im folgenden allgemein als Reibmesser bezeichnet) auf, die das Reiben von Lebensmitteln ermöglichen, wenn das zu reibende Lebensmittel über die entsprechenden Reibmesser geführt wird. Entsprechende Reibmesser sind dem Fachmann an sich bekannt und wurden bereits vielfältig in der Literatur beschreiben, so dass sich hier nähere Angaben erübrigen.

Um die erfindungsgemäße Vorrichtung auch als Abtropfvorrichtung einsetzen zu können, ist es erforderlich, dass die Reibmesser Durchbrüche im funktionalen Element beinhalten, die sich von einer Oberfläche auf die andere Oberfläche des funktionalen Elements erstrecken und durch die bei der Verwendung als Abtropfvorrichtung die Flüssigkeit ablaufen kann.

Geeignet als Reibmesser sind beispielsweise Gratvorsprünge auf der Oberfläche über die das zu reibende Lebensmittel geführt werden kann. Durch entsprechende Gestaltung von Größe und Form der Reibmesser kann die Form des geriebenen Produkts beeinflusst bzw. festgelegt werden.

Gemäß der vorliegenden Erfindung ist mindestens eine der Oberflächen des funktionalen Elements mit Reibmessern versehen. In einer bevorzugten Ausgestaltung der Erfindung ist es möglich, beide Oberflächen des funktionalen Elements mit Reibmessern zu versehen, die auch unterschiedlich in Form und Größe ausgestaltet werden können. Dadurch ist es möglich, mit der gleichen Vorrichtung unterschiedliche geriebene Produkte zu erzeugen, je nachdem welche Oberfläche für den Reibevorgang eingesetzt wird.

Das funktionale Element der erfindungsgemäßen Vorrichtung weist an den beiden im wesentlichern geraden Kanten Halteeinrichtungen auf, mit denen das funktionale Element gehalten werden kann. Diese Halteeinrichtungen können integraler Bestandteil des funktionalen Elements sein oder nachträglich an das funktionale Element angefügt werden.

In beiden Ausgestaltungen sollte darauf geachtet werden, dass Halteeinrichtung und funktionales Element so fest miteinander verbunden sind, dass bei der Anwendung der erfindungsgemäßen Vorrichtung das funktionale Element mit Hilfe der Halteinrichtungen sicher gehalten werden kann, d.h. es vorzugsweise bei der Nutzung nicht zu einer Relativbewegung von funktionalem Element und Halteeinrichtungen kommt.

Form und Ausgestaltung der Halteeinrichtungen unterliegen dabei keinen besonderen Beschränkungen, so dass hier weitgehend Freiheit in der Gestaltung besteht. Geeignete Halteeinrichtungen wurden in einer Vielzahl bereits im Stand der Technik beschrieben, so dass sich hier nähere Angaben erübrigen.

Auch bei der Auswahl des Materials der Halteeinrichtungen gibt es keine Beschränkungen, so dass aus einer Vielzahl von Materialen ausgewählt werden kann. Nur beispielhaft seien als Materialien Holz- oder Holzwerkstoffe, Kunststoffe (einschließlich Verbundwerkstoffen), keramische Werkstoffe oder metallische Werkstoffe genannt, aus denen der Fachmann wählen kann.

Die Art der Befestigung der Halteeinrichtungen am funktionalen Element unterliegt ebenfalls keiner Beschränkung, solange sichergestellt ist, dass ein sicheres Halten der Vorrichtung bei der Anwendung gegeben ist. Nur beispielhaft seien hier Verkleben, Verschweißen, Vernieten oder Verschrauben als geeignete Befestigungsverfahren genannt. Des weiteren ist es auch denkbar, das funktionale Element mit den im Wesentlichen geraden Kanten in entsprechende in die Halteeinrichtungen integrierte Aufnahmeeinrichtungen lösbar einzuführen, solange ein sicherer Halt bei der Anwendung der Vorrichtung gegeben ist.

Wie ausgeführt kann das funktionale Element der erfindungsgemäßen Vorrichtung durch Aufeinanderzubewegen der beiden Halteeinrichtungen in eine im wesentlchen kegelförmige oder im wesentlichen kegelstumpfförmige Form überführt werden. Dies ist von Vorteil, wenn die erfindungsgemäße Vorrichtung als Reibevorrichtung eingesetzt wird, da dann das geriebene Produkt sich in einer Fläche sammelt, die vom Kegel oder Kegelstumpf umschlossen ist und dort einfach entnommen werden kann. Falls beide Oberflächen des funktionalen Elements mit Reibemessern ausgestaltet sind, kann durch Wahl der Richtung, in der die Halteeinrichtungen aufeinander zu bewegt werden, die Oberfläche festgelegt werden, die als Reiboberfläche zum Einsatz kommt. Es ist aber prinzipiell auch denkbar, die Reibefunktion der erfindungsgemäßen Vorrichtung unabhängig davon zu nutzen, ob das funktionale Element im wesentlichen in planarer Form oder im wesentlichen in Form eines Kegels oder eines Kegelstumpfes vorliegt. Bei der Verwendung in Form eines Kegels oder eines Kegelstumpfes ist ein Halten der Vorrichtung mit nur einer Hand leichter möglich und die Stabilität als Reibevorrichtung ist erhöht.

Nach Abschluss des Reibevorgangs kehrt das funktionale Element, sobald die beiden Halteeinrichtungen wieder voneinander weg bewegt werden, in eine im wesentlichen planare Form zurück , in der eine Reinigung einfacher möglich ist als in der Form eines Kegels oder eines Kegelstumpfes. Die erfindungsgemäße Vorrichtung vereinigt somit die Vorteile einer einfachen Reinigung mit den Vorteilen einer besseren Reibefunktion.

Eine dritte Funktion; die die erfindungsgemäße Vorrichtung übernehmen kann, ist die einer Abtropfvorrichtung. Abtropfvorrichtungen werden immer dann benötigt, wenn ein Lebensmittel in einer Flüssigkeit (in der Regel Wasser oder eine wäßrige Lösung) zubereitet wird und anschließend das zubereitete Lebensmittel und die Flüssigkeit wieder getrennt werden sollen.

Die Funktion einer Abtropfvorrichtung kann beispielsweise einfach dadurch erreicht werden, dass das funktionale Element in einer im wesentlichen planaren Form auf ein Gefäß, in dem sich die das zubereitete Lebensmittel enthaltende Flüssigkeit befindet, aufgelegt und dann das Gefäß in eine Lage gebracht wird, in der die Flüssigkeit der Schwerkraft folgend durch die Durchbrüche des funktionalen Elements abfließen kann. Das funktionale Element fungiert bei dieser Verwendung als Sieb.

Die erfindungsgemäße Vorrichtung kann gemäß einer Ausführungsform der Erfindung mit einer Arbeitsplatte kombiniert werden. Diese Arbeitsplatte kann Befestigungsmittel aufweisen, mit denen die erfindungsgemäße Vorrichtung bei Nichtbenutzung gehalten werden kann. Gemäß einer bevorzugten Gestaltung dieser Ausführungsform kann das Befestigungsmittel, aus einem in die Arbeitsplatte eingearbeiteten Schlitz bestehen, in welchen die als Schneidkörper gestaltete erste Kante der erfindungsgemäßen Vorrichtung eingesteckt werden kann. Der Eingang dieses Schlitzes kann von die eingesteckte Vorrichtung reibschlüssig haltenden Lippen begrenzt sein.

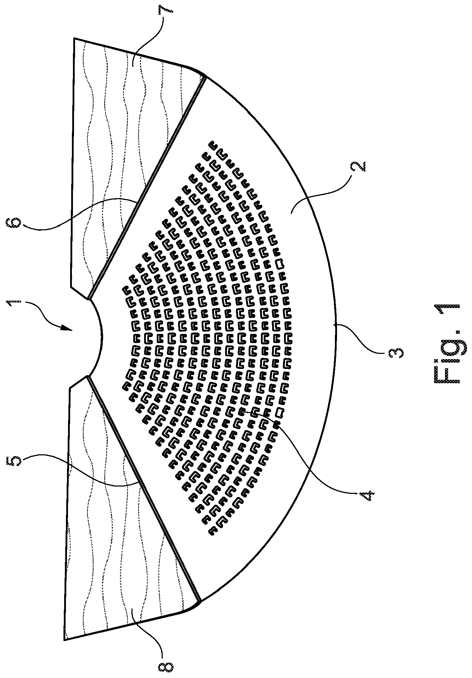

Figur 1 zeigt eine Ausführungsform einer erfindungsgemäßen Vorrichtung 1 mit einem funktionalem Element 2, einer im wesentlichen kreisbogenförmigen ersten Kante 3, die als Schneidkörper ausgestaltet ist. Das funktionale Element 2 weist Reibmesser 4 in Form von Durchbrüchen mit gratartigen Erhöhungen auf. An den geraden Kanten (5, 6) des funktionalen Elements sind Halteeinrichtungen (7, 8) angeordnet. Das funktionale Element 2 kann durch Aufeinanderzubewegen der Halteeinrichtungen (7,8) in die Form eines Kegels oder eines Kegelstumpfes überführt werden.

Die erfindungsgemäße Vorrichtung beitet den Vorteil drei Anwendungen zu ermöglichen, ohne dass mehr Platz benötigt wird, als für Vorrichtungen, die nur eine dieser Funktionen erfüllen können, benötigt würde.

Zudem ist die erfindungsgemäße Vorrichtung einfach zu reinigen.

## Patentansprüche

1. Vorrichtung, geeignet zur Verwendung als Schneidevorrichtung zum Zerkleinern von Lebensmitteln, als Reibevorrichtung zum Reiben von Lebensmitteln und als Abtropfvorrichtung,
mit einem funktionalen, im wesentlichen planaren, Element (2) welches von einer im wesentlichen kreisbogenförmigen ersten Kante (3) und zwei weiteren im wesentlichen geraden Kanten (5,6) begrenzt wird, die sich selbst oder deren Verlängerungen sich in einem Punkt schneiden,
wobei die erste Kante (3) des funktionalen Elements (2) ganz oder teilweise als Schneidkörper ausgestaltet ist und das funktionale Element (2) auf mindestens einer seiner Oberflächen vorstehende Einrichtungen (4) aufweist, die ein Reiben von Lebensmitteln ermöglichen, und die beiden im wesentlichen geraden Kanten (5,6) des funktionalen Elements mit Halteeinrichtungen (7,8) versehen sind, mit denen das funktionale Element (2) gehalten werden kann,
wobei das funktionale Element (2) der Vorrichtung durch Aufeinanderzubewegen der beiden Halteeinrichtungen (7,8) in eine im wesentlichen kegelförmige oder im wesentlichen kegelstumpfartige Form überführt werden kann.

2. Vorrichtung gemäß Anspruch 1, **dadurch gekennzeichnet, dass** das funktionale Element (2) aus einem metallischen Werkstoff besteht.

3. Vorrichtung gemäß Anspruch 1 oder 2, **dadurch gekennzeichnet, dass** beide Enden der beiden geraden Kanten (5,6) jeweils durch im wesentlichen kreisbogenförmige Kanten verbunden sind.

## Claims

1. Device suitable for use as a cutting device for crushing food, as a grating device for grating foods and as a draining device, with a functional, essentially planar element (2) which is delimited by an essentially circular arc-shaped first edge (3) and two further essentially straight edges (5, 6) which intersect themselves or whose extensions intersect at a point, wherein the first edge (3) of the functional element (2) is designed entirely or partially as a cutting body and the functional element (2) at at least one of its surfaces has protruding devices (4) which enable food to be grated, and the two essentially straight edges (5,6) of the functional element are provided with holding devices (7,8) with which the functional element (2) can be held, wherein the functional element (2) of the device can be converted into a substantially conical or substantially truncated cone-like shape by moving the two holding devices (7, 8) towards each other.

2. Device according to claim 1 **characterized in that** the functional element (2) consists of a metallic material.

3. Device according to claims 1 or 2, **characterized in that** both ends of the two straight edges (5,6) are connected through essentially arc shaped edges

## Revendications

1. Dispositif pouvant être utilisé comme dispositif de coupe pour broyer les aliments, comme dispositif à râper aliments et comme égouttoir, avec un élément fonctionnel essentiellement plan (2) qui est délimité par un premier bord (3) essentiellement en forme d'arc de cercle et deux autres bords essentiellement droits (5, 6) qui se coupent ou dont les extensions se coupent en un point, le premier bord (3) de l'élément fonctionnel (2) étant entièrement ou partiellement conçu comme un corps de coupe et l'élément fonctionnel (2), au moins une de ses surfaces présente des dispositifs saillants (4) qui permettent de râper les aliments, et les deux bords droits essentiels (5,6) de l'élément fonctionnel sont prévus avec deux dispositifs de maintien (7, 8) avec lesquels l'élément fonctionnel (2) peut être maintenu, dans lequel l'élément fonctionnel (2) du dispositif le déplacement des deux dispositifs de maintien (7, 8) l'un vers l'autre peut être transformé en une forme sensiblement conique ou essentiellement tronconique.

2. Dispositif selon la revendication 1, **caractérisé en ce que** l'élément fonctionnel (2) est constitué d'un matériau métallique.

3. Dispositif selon la revendication 1 ou 2, **caractérisé en ce que** les deux extrémités des deux bords droits (5,6) sont chacune traversantes les bords essentiels en forme d'arc de cercle sont connectés.
